Europäisches Patentamt

European Patent Office

Office européen des brevets

(11) Veröffentlichungsnummer: **0 054 913**
**B1**

(12) **EUROPÄISCHE PATENTSCHRIFT**

(45) Veröffentlichungstag der Patentschrift:
10.04.85

(51) Int. Cl.⁴: **B 23 B 51/04**

(21) Anmeldenummer: 81110520.4

(22) Anmeldetag: 17.12.81

(54) **Bohrwerkzeug.**

(30) Priorität: 22.12.80 AT 6232/80

(43) Veröffentlichungstag der Anmeldung:
30.06.82 Patentblatt 82/26

(45) Bekanntmachung des Hinweises auf die Patenterteilung:
10.04.85 Patentblatt 85/15

(84) Benannte Vertragsstaaten:
BE CH DE FR GB IT LI NL SE

(56) Entgegenhaltungen:
DE - B - 2 730 418
US - A - 4 268 198
US - A - 4 278 373

TECHNISCHE RUNDSCHAU, Band 69, Nr. 41, Oktober
1977, "Stirbt der Spiralbohrer?", Seite 23

(73) Patentinhaber: **METALLWERK PLANSEE
GESELLSCHAFT M.B.H., A-6600 Reutte, Tirol (AT)**

(72) Erfinder: **Storf, Roland, Dipl.-Ing., Unterdorf 24a,
A-6600 Lechaschau (AT)**

(74) Vertreter: **Lohnert, Wolfgang, Dr., Metallwerk Plansee
GmbH, A-6600 Reutte, Tirol (AT)**

## Beschreibung

Die Erfindung betrifft ein Bohrwerkzeug mit Ausgleich der radialen Schnittkräfte, dessen Bohrerschaft mindestens zwei, um gleiche Umfangswinkel gegeneinander versetzte Aufnahmen aufweist, in die jeweils mindestens eine, mehrere gleichlange Schneidkanten aufweisende, auswechselbare Wendeschneidplatte in radialer Richtung eingebracht ist und wobei jede einzelne Wendeschneidplatte so positioniert ist, dass eine erste Schneidkante über die gesamte Länge und eine zweite, unter einem Winkel β zur ersten stehende Schneidkante längs eines Teilabschnittes in Schneideingriff steht.

Der Grossteil der bekannten Bohrwerkzeuge mit Wendeschneidplatten ist so aufgebaut, dass es infolge unsymmetrischer Schnittkraftverhältnisse zu einer ungünstigen radialen Krafteinwirkung auf den Bohrerschaft kommt, was ein Verlaufen der Bohrung bewirkt. Ein Arbeiten mit diesen Bohrwerkzeugen ist daher teilweise nur mit einer oder mehreren am Bohrerschaft angebrachten Stützleisten, die das Bohrwerkzeug an der Bohrwandung abstützen, möglich. Aber auch mit diesen Stützleisten können die Nachteile dieser Bohrwerkzeuge, wie schlechte Oberflächengüte der Bohrung, geringe nutzbare Länge des Bohrwerkzeuges, grosse Beanspruchungen der Maschinenlager, nicht vollständig überwunden werden. Darüberhinaus unterliegen die Stützleisten einem sehr grossen Verschleiss und müssen daher immer wieder erneuert werden, was sich in erhöhten Bohrkosten auswirkt.

Die DE-AS-27 30 418 beschreibt ein Bohrwerkzeug, bei dem die Winkelhalbierende der in Schneideingriff stehenden Schneidkanten jeder Wendeschneidplatte parallel zur Bohrerachse angeordnet ist. Als Schneideinsätze werden bei diesem Werkzeug vorzugsweise Sechseck-Wendeschneidplatten eingesetzt, bei denen jeweils an jeder zweiten Schneidecke die benachbarten Schneidkanten einen Winkel von ca. 156° miteinander einschliessen. Mit diesem Bohrwerkzeug ist es möglich, einen Kraftausgleich des Bohrerschaftes in radialer Richtung zu bewirken, jedoch nur unter der Bedingung, dass jeweils beide in Eingriff stehenden Schneidkanten im wesentlichen über ihre volle Länge in Eingriff stehen. Die Schneidkanten der einzelnen Schneideinsätze dürfen sich also zum Bohren der gewünschten Durchmesser in ihrer Schneidwirkung praktisch nicht überlappen, da es sonst zu einem ungleichen Eingriff der zwei aktiven Schneidkanten jedes Einsatzes und damit zu einem ungenügenden radialen Kraftausgleich kommt. Das bedeutet, dass schon zur Herstellung von Bohrungen von geringfügig unterschiedlichen Bohrdurchmessern jeweils verschieden grosse Schneideinsätze in Bohrwerkzeugen verwendet werden müssen. Zur Abdeckung des gesamten technisch interessanten Durchmesserbereiches ist daher eine Vielzahl unterschiedlich grosser Schneideinsätze erforderlich, was zu einer erheblichen Verteuerung der anteiligen Bohrkosten mit Bohrwerkzeugen dieser Art führt. In der Praxis besteht jedoch nur ein beschränktes Angebot an Schneideinsatz-Grössen, so dass in der Mehrzahl der Fälle nicht beide Schneidkanten eines Schneideinsatzes gleichzeitig über ihre volle Länge im Eingriff stehen.

Der Erfindung liegt die Aufgabe zugrunde, einen Ausgleich der radialen Schnittkräfte bei einem Bohrwerkzeug der eingangs erwähnten Art zu schaffen, um einen möglichst grossen Bereich an abgestuften Bohrdurchmessern mit einer geringen wirtschaftlich vertretbaren Anzahl unterschiedlich grosser Wendeschneidplatten abzudecken.

Erfindungsgemäss wird dies dadurch erreicht, dass die Aufnahmen für die einzelnen Wendeschneidplatten derart angebracht sind, dass sich die radialen Schnittkraftkomponenten der im Eingriff stehenden Schneidkanten für jede einzelne Wendeschneidplatte ausgleichen, indem die Winkelhalbierenden dieser Schneidkanten gegen die Parallelen zur Bohrerachse um einen Winkel α geneigt werden welcher Winkel α von der wirksamen Länge der längs eines Teilabschnittes in Eingriff stehenden Schneidekante abhängig ist.

Dadurch wird auf einfache Weise erreicht, dass sich die Schneideinsätze in ihrem Wirkungsbereich mehr oder weniger stark überlappen können, so dass schon mit einer einzigen Wendeschneidplattengrösse eine grosse Zahl verschiedener Durchmesserabstufungen abgedeckt werden kann. Die auftretenden Radialkräfte, die das Bohrwerkzeug üblicherweise seitlich abzudrängen versuchen und die sich mit dem Anteil der jeweiligen Schneideinsatz-Überlappungen in ihrer Grösse ändern, werden gemäss vorliegender Erfindung in jeder einzelnen Wendeschneidplatte durch mehr oder weniger starke Neigung der Winkelhalbierenden der beiden in Eingriff stehenden Schneidkanten ausgeglichen.

Es wird bei allen Einsatzfällen und Bohrdurchmessern ein vollkommener Kraftausgleich des Bohrerschaftes in radialer Richtung erzielt. Bei Bohrwerkzeugen, deren radiale Schnittkräfte erfindungsgemäss ausgeglichen werden, wird ein Verlaufen der Bohrerachse und Durchmesser-Änderungen der erzeugten Bohrung vermieden. Ebenso wird die Oberflächengüte der Bohrungswandung erheblich verbessert. Rückzugsriefen treten nicht mehr auf. Die Werkzeuglänge, die bei bekannten Bohrwerkzeugen dieser Art auf das 2,0- bis 2,5-fache des Bohrerdurchmessers beschränkt war, kann über diesen Bereich hinaus vergrössert werden. Durch die erfindungsgemässe mögliche geringe Neigung der an den Bohrungsumfang heranreichenden Schneidkante zur Horizontalen, können besonders gut und mit enger Toleranz zusätzliche Bearbeitungen, wie Innen- und Aussendreharbeiten, durchgeführt werden, da die seitliche Abdrängung des Bohrwerkzeuges verringert wird. Ein weiterer Vorteil liegt auch noch darin, dass durch die spezielle Ausgestaltung des Bohrwerkzeuges der Bohrungsgrund flacher ausgebohrt wird, so dass bei erforderlichen Nacharbeiten, wie Ausdrehen des Bohrungsgrundes oder Einarbeiten von rechtswinkeligen Schultern, ein geringerer Arbeitsaufwand notwendig ist. Auch ein Weiterbohren wird erleichtert, da durch den flachen Bohrungsgrund ein Zentrierbohrer grossteils entfallen kann.

Besonders vorteilhaft ist es, wenn bei einem Bohrwerkzeug sechseckige Wendeschneidplatten, bei denen die jeweils in Eingriff stehenden Schneidkanten einen Winkel von 160° aufweisen, verwendet werden. Mit diesen genormten Wendeschneidplatten wird ein dreifaches Umsetzen der Wendeschneidplatten ermöglicht. Die erforderlichen Zusatzarbeiten können mit diesem Werkzeug besonders leicht und genau ausgeführt werden, da die radial äussere Schneidkante eine besonders geringe Neigung gegenüber der Horizontalen aufweist.

Erfindungsgemässe Bohrwerkzeuge haben sich bei der Bearbeitung der verschiedensten Metall-Materialien bestens bewährt, und sie sind sowohl zur feststehenden als auch zur drehenden Bearbeitung gleichermassen gut geeignet.

Für die meisten Einsatzfälle wird es vorteilhaft sein, die Bohrwerkzeuge mit zwei Wendeschneidplatten, die in um 180° gegeneinander versetzten Aufnahmen angeordnet sind, auszuführen. Ebenso ist es denkbar, die Bohrwerkzeuge mit drei oder mehr Wendeschneidplatten zu bestücken, wobei die einzelnen Aufnahmen für die Wendeschneidplatten jeweils mit gleichen Umfangswinkel-Abständen zueinander angeordnet sind. Es ist aber auch möglich, in jeder der jeweils mit gleichen Umfangswinkel-Abständen zueinander angeordneten Aufnahmen zwei oder mehr Wendeschneidplatten mit unterschiedlichen radialen Abständen anzuordnen.

Die Erfindung wird im folgenden an Hand der Zeichnungen näher erläutert. Es zeigen:

Fig. 1 Seitenansicht eines erfindungsgemässen Bohrwerkzeuges

Fig. 2 Stirnansicht des Bohrwerkzeuges nach Fig. 1

Fig. 3 Prinzipskizze, die die Kräfteverhältnisse an einem Bohrwerkzeug mit symmetrischer Anordnung der Schneideinsätze in seitlicher Ansicht wiedergibt

Fig. 4 Prinzipskizze, die die Kräfteverhältnisse nach Fig. 3 in Stirnansicht wiedergibt

Fig. 5 Prinzipskizze, die die Kräfteverhältnisse am erfindungsgemässen Bohrwerkzeug nach Fig. 1 in seitlicher Ansicht wiedergibt

Fig. 6 Prinzipskizze, die die Kräfteverhältnisse am erfindungsgemässen Bohrwerkzeug nach Fig. 1 in Stirnansicht wiedergibt

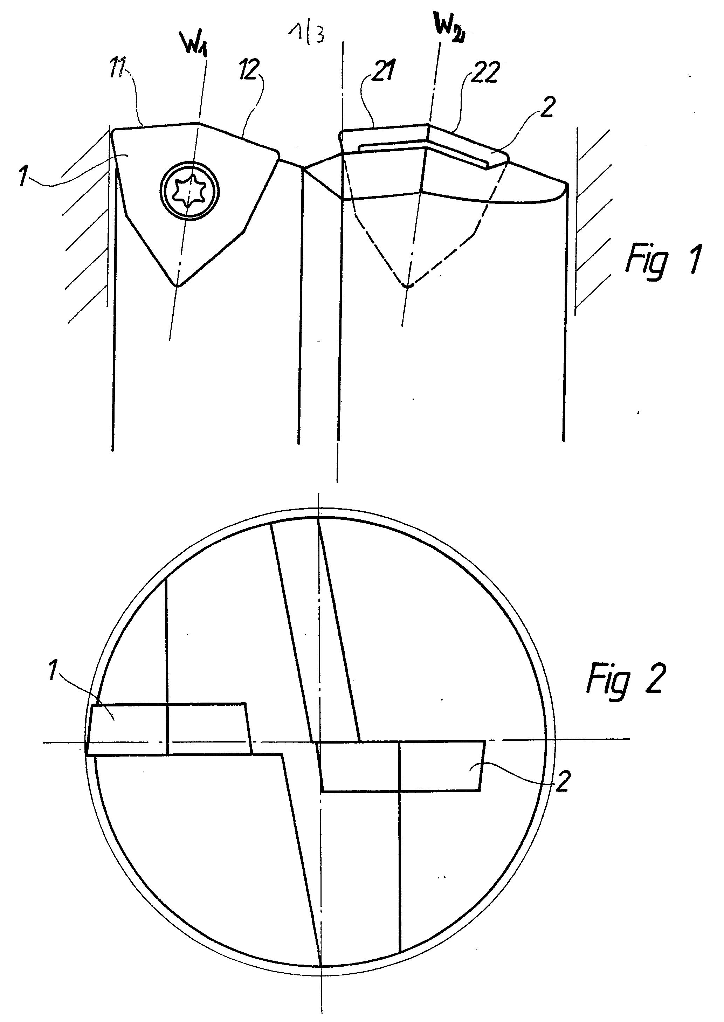

In Fig. 1 und 2 ist ein Bohrwerkzeug entsprechend der Erfindung dargestellt. Der Bohrerschaft weist zwei sich axial erstreckende Ausnehmungen auf, die zur Entfernung der Bohrspäne dienen. Diese Ausnehmungen sind um 180° gegeneinander versetzt. An der Stirnseite des Bohrers ist jeweils in Aufnahmen an einer Begrenzungswand jeder Spanausnehmung jeweils eine sechseckige Wendeschneidplatte mit Mittelloch angeordnet. Die beiden jeweils in Eingriff stehenden Schneidekanten schliessen einen Winkel $\beta$ von 160° miteinander ein.

Jede Wendeschneidplatte ist mit einem Klemmbolzen umsetz- und auswechselbar befestigt. Die Wendeschneidplatten stehen jeweils mit zwei Schneidkanten in Schneideingriff, wobei je eine Schneidkante über die gesamte Länge in Eingriff steht, während sich die andere Schneidkante in ihrem Wirkungsbereich mit der entsprechenden Schneidkante der zweiten Wendeschneidplatte überdeckt, so dass sie nur mit einem Teilabschnitt in Eingriff steht. Die Wendeschneidplatte -1- schneidet den Bereich der Bohrung der an den Bohrerumfang heranreicht, während die Wendeschneidplatte -2- den an die Bohrungsachse angrenzenden Bereich schneidet. Bei jeder Wendeschneidplatte ist die Winkelhalbierende -$W_1$- bzw. -$W_2$- der beiden in Schneideingriff stehenden Schneidkanten gegen die Bohrerachse um 5° geneigt, so dass in dem dargestellten Fall, in dem die Schneidkanten 12 und 22 nur zur Hälfte in Eingriff stehen, ein Kraftausgleich des Bohrerschaftes in radialer Richtung erreicht wird.

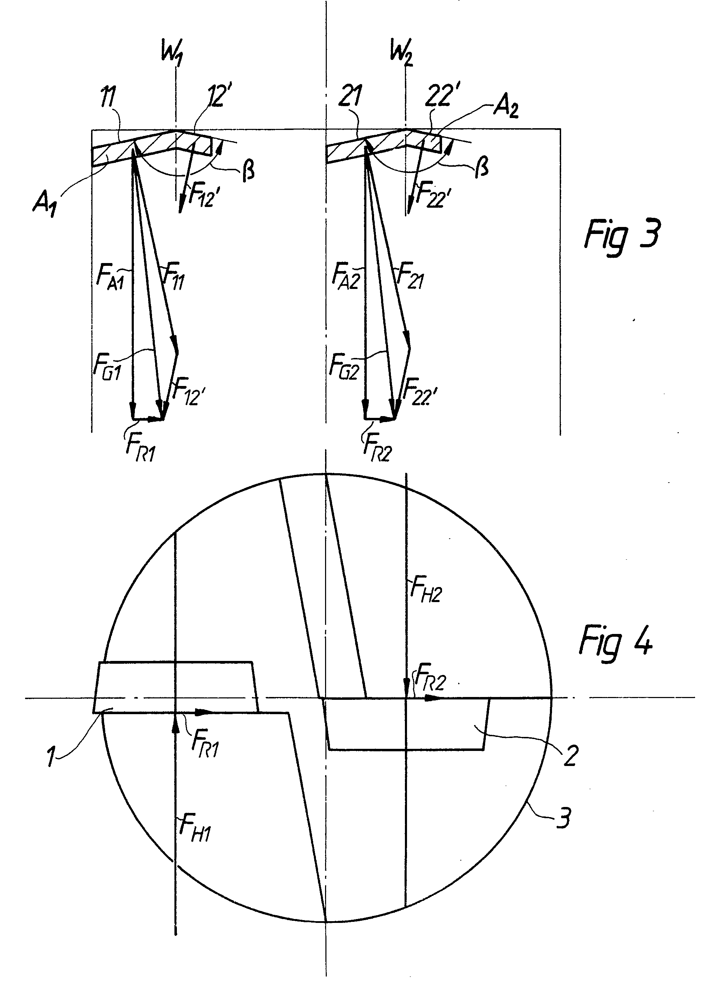

Fig. 3 und 4 stellen die genauen Schnittkraft-Verhältnisse dar, die an einem bekannten Bohrwerkzeug auftreten, bei dem, sich in ihrer Schneidwirkung überlappende, sechseckige Wendeschneidplatten -1-, -2- mit einem Winkel $\beta$, der jeweils in Schneideingriff stehenden Schneidkanten von 160°, symmetrisch eingesetzt werden. In diesem Fall liegt die Winkelhalbierende $W_1$- bzw. -$W_2$- des Winkels jeweils parallel zur Bohrachse. Die schraffierten Flächen -$A_1$- bzw. -$A_2$- stellen den von jeder Wendeschneidplatte während einer Umdrehung abgespanten Querschnitt dar. Bei kleinen Eckenradien der Wendeschneidplatten kann man mit ausreichender Genauigkeit annehmen, dass die Schnittkräfte normal auf die Schneidkante auftreffen und in etwa proportional dem abgespanten Querschnitt sind. Bei der den Bohrungsumfang schneidenden Wendeschneidplatte -1- treten demnach die beiden Teilkräfte F 11 und F12' auf und bilden gemeinsam die Resultierende FG 1, die sich wiederum in die Achsialkraft FA 1 und in die Radialkraft FR 1 zerlegen lässt. Die Schnittkräfte der im Zentrum schneidenden Wendeschneidplatte 2 ergeben sich analog aus der Achsialkraft FA 2 und der Radialkraft FR 2. Das Bohrwerkzeug wird daher in axialer Richtung mit der Kraft FA 1 plus FA 2 und in radialer Richtung mit der Kraft FR 1 plus FR 2 belastet, die versucht, den Bohrer aus der Bohrerachse abzudrängen.

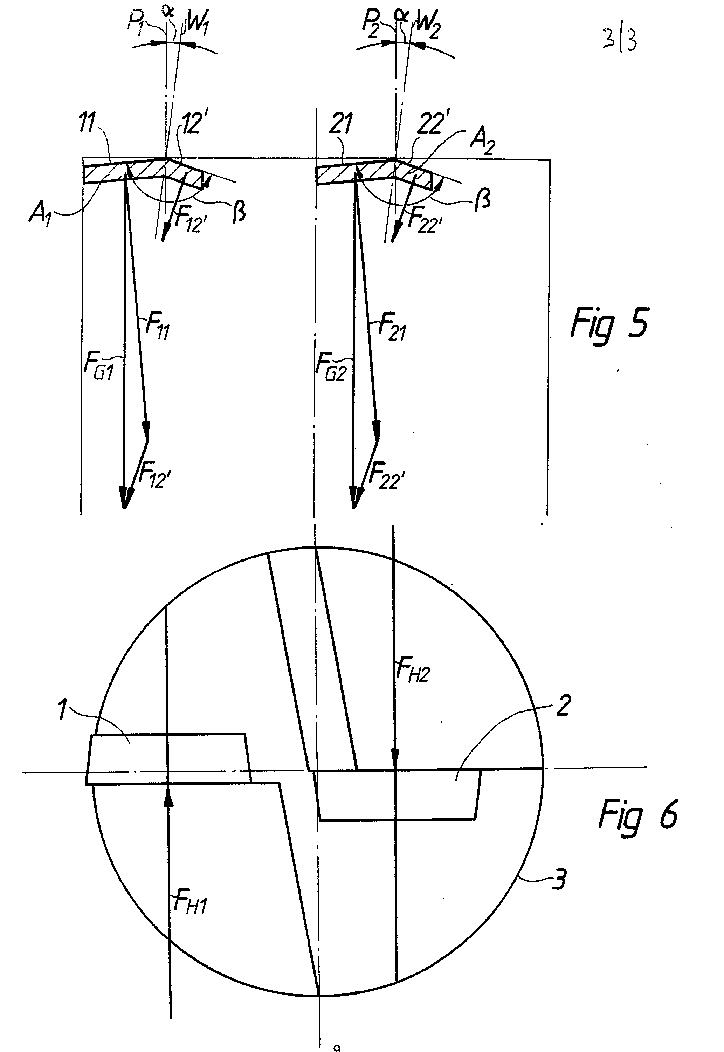

Fig. 5 und 6 stellen die Schnittkraft-Verhältnisse an einem erfindungsgemässen Bohrwerkzeug mit den gleichen Wendeschneidplatten wie in Fig. 3 und 4 dar. In diesem Fall ist jeweils die Winkelhalbierende -$W_1$- bzw. -$W_2$- der beiden im Eingriff stehenden Schneidkanten -11- und -12- bzw. -21- und -22- entsprechend dem in Eingriff stehenden Teilabschnitt -12'- bzw. -22'- der zweiten Schneidkante der Wendeschneidplatte zu einer Parallelen zur Bohrerachse -$P_1$- bzw. -$P_2$- so geneigt, dass die sich aus den Schnittkräften F 11 und F 12' bzw. F 21 und F 22' zusammensetzende Resultierende FG 1 bzw. FG 2 parallel zur Bohrerachse verläuft. Es wird also erreicht, dass keine Kraftkomponente in radialer Richtung auftritt. Da die Spanquerschnitte -$A_1$- und -$A_2$- der beiden Wendeschneidplatten annähernd gleich gross sind, heben sich die Schnittkräfte FH 1 und FH 2 gegenseitig auf. Eine Ablenkung des Bohrerschaftes in radialer Richtung wird daher vermieden.

## Patentansprüche

1. Bohrwerkzeug mit Ausgleich der radialen Schnittkräfte, dessen Bohrerschaft mindestens zwei, um gleiche Umfangswinkel gegeneinander versetzte Aufnahmen aufweist, in die jeweils mindestens eine, mehrere gleichlange Schneidkanten (11, 12, 21, 22) aufweisende, auswechselbare Wendeschneidplatte in radialer Richtung eingebracht ist und wobei jede einzelne Wendeschneidplatte so positioniert ist, dass eine erste Schneidkante (11, 21) über die gesamte Länge und eine zweite, unter einem Winkel ($\beta$) zur ersten stehende Schneidkante (12, 22), längs eines Teilabschnittes (12′−, 22′) in Schneideingriff steht, dadurch gekennzeichnet, dass die Aufnahmen für die einzelnen Wendeschneideplatten (1, 2) derart angebracht sind, dass sich die radialen Schnittkraftkomponenten der im Eingriff stehenden Schneidkanten (11, 12′; 21, 22′) für jede einzelne Wendeschneidplatte ausgleichen, indem die Winkelhalbierenden (W1, W2) dieser Schneidkanten (11, 12′; 21, 22′) gegen die Parallelen (P1, P2) zur Bohrerachse um einen Winkel ($\alpha$) geneigt werden, welcher Winkel ($\alpha$) von der wirksamen Länge des längs eines Teilabschnittes (12′, 22′) in Eingriff stehenden Schneidkante (12, 22) abhängig ist.

2. Bohrwerkzeuge nach Anspruch 1, dadurch gekennzeichnet, dass die Wendeschneidplatten jeweils sechseckig sind und die jeweils in Eingriff stehenden Schneidkanten einen Winkel $\beta$ von 160° einschliessen.

3. Bohrwerkzeug nach Anspruch 2, dadurch gekennzeichnet, dass die Winkelhalbierenden (W1, W2) der in Eingriff stehenden Schneidkanten (11, 12′, 21, 22′) einen Winkel $\alpha$ zwischen 2,5° und 9° gegenüber einer Parallelen (P1, P2) zur Bohrerachse aufweisen.

## Revendications

1. Outil de perçage avec efforts de coupe radiaux compensés, dont la tige présente au moins deux logements qui sont mutellement décalés d'angles périphériques égaux et dans chacun desquels est introduite, en direction radiale, au moins une plaquette de coupe amovible présentant plusieurs arêtes de coupe (11, 12, 21, 22) de longueurs égales, chaque plaquette individuelle étant positionnée de façon qu'une première arête de coupe (11, 21) soit active sur toute sa longueur et qu'une deuxième arête de coupe (12, 22), formant un angle ($\beta$) par rapport à la première, soit active sur une portion (12′, 22′) de sa longueur, caractérisé en ce que les logements pour les plaquettes de coupe amovibles individuelles (1, 2) sont aménagés de manière telle que les composantes radiales des efforts de coupe des arêtes de coup actives (11, 12′; 21, 22′) se compensent pour chaque plaquette individuelle, les bissectrices (W1, W2) de ces arêtes de coupe (11, 12′; 21, 22′) étant, par rapport aux parallèles (P1, P2) à l'axe de l'outil, inclinées d'un angle ($\alpha$) qui dépend de la longueur agissante de l'arête de coupe (12, 22) active le long d'une portion (12′, 22′).

2. Outil selon la revendication 1, caractérisé en ce que chaque plaquette de coupe amovible est hexagonale, et en ce que ses arêtes de coupe actives forment entre elles un angle ($\beta$) de 160°.

3. Outil selon la revendication 2, caractérisé en ce que les bissectrices (W1, W2) des arêtes de coupe actives (11, 12′, 21, 22′) présentent un angle ($\alpha$) compris entre 2,5° et 9° par rapport à une parallèle (P1, P2) á l'axe de l'outil.

## Claims

1. Drilling tool, compensating the radial cutting forces, with a shank comprising at least two recesses staggered thereon at equal circumference angles, each of said recesses bearing in radial direction at least one replaceable cutting tip with several cutting edges (11, 12, 21, 22) of equal length, whereby each of the cutting tips is positioned in such a way, that a first cutting edge (11, 21) is engaged in the cutting operation along its full length and a second cutting edge, including an angle ($\beta$) with the first cutting edge (12, 22), along a partial section, characterized in, that the positioning of the cutting tips (1, 2) in the recesses is performed in such a manner that for each single cutting tip the radial components of the cutting forces of the cutting edges (11, 12′; 21, 22′) engaged are neutralized by means of an inclination of the angle bisectors ($W_1$, $W_2$) of the cutting edges (11, 12′; 21, 22′) engaged for an angle ($\alpha$) to the parallels (P1, P2) with the tool axis, wehreby said angle ($\alpha$) corresponds to the effective length of the cutting edge (12, 22) engaged along a partial section (12′, 22′).

2. Drilling tool according to claim 1, characterized in, that the cutting tips are of hexagonal shape and that the cutting edges engaged enclose an angle of 160°.

3. Drilling tool according to claim 2, characterized in, that the angle bisectors ($W_1$, $W_2$) of the cutting edges (11, 12′; 21, 22′) engaged are enclosing an angle ($\alpha$) between 2,5° and 9° with a parallel (P1, P2) to the axis of the drilling tool.

Fig 1

Fig 2

Fig 3

Fig 4

Fig 5

Fig 6